# DEMANDE DE BREVET EUROPEEN

(11) **EP 2 273 798 A1**
(43) Date de publication de la demande: **12.01.2011**
(21) Numéro de dépôt: 10169075.8
(22) Date de dépôt: 09.07.2010
(51) Int. Cl.: H04Q 9/00, G08B 21/12

(54) **Suivi d'un parc de piscines**

(30) Priorité: 10.07.2009 FR 0954840
(71) Demandeur: Klereo, 78360 Montesson (FR)
(72) Inventeur: Duchamp, Lionel, 74540 Gruffy (FR); Saaid, Omar, 78600 Maison Laffite (FR); Boutet, Jean-Marc, 78230 Le Pecq (FR)
(74) Mandataire: Novaimo

(57) **Abrégé**

Procédé de gestion d'un parc de piscines, chaque piscine étant munie d'un moyen de contrôle de la qualité de l'eau contenue dans la piscine, chacun des moyens de contrôle communiquant au moyen d'un réseau de communication avec au moins un centre de gestion , **caractérisé en ce qu**'il comprend une première étape de détection d'un état dégradé sur au moins une piscine du parc, dite « piscine victime », et une deuxième étape de détermination de piscines du parc menacées de passage dans un état dégradé, dites pour chacune « piscine menacée ». Centre de gestion d'un parc de piscines mettant en oeuvre un tel procédé, équipement de suivi d'un sous-ensemble d'un parc de piscines, moyen de contrôle de la qualité de l'eau contenue dans une piscine et utilisation d'une piscine comme capteur pour déterminer un risque potentiel.

## Description

L'invention concerne le domaine de la gestion à distance de parc de piscines individuelles. Une piscine individuelle est munie de moyens de contrôle de la qualité de l'eau contenue dans la piscine. Un tel moyen de contrôle comprend des moyens d'analyse physico-chimique ou bactériologique de l'eau et de paramètres ambiants et des moyens de traitement tels que pompe doseuse, ozoneur, éclairage ultraviolet, moteur de circulation, filtres, etc.

Le moyen de contrôle peut être suffisamment bien conçu pour assurer la bonne qualité de l'eau sans intervention du propriétaire de la piscine ou du moins en limitant ses interventions et/ou en le guidant dans celles-ci pour les simplifier au maximum.

Cependant, il est fréquent de confier l'entretien d'une telle piscine à un agent d'entretien chargé de s'assurer périodiquement du bon fonctionnement du moyen de contrôle et de la qualité de l'eau, notamment pendant les périodes d'absence du propriétaire s'il s'agit d'une piscine installée dans une résidence secondaire.

Un problème associé à la qualité de l'eau d'une piscine est la possibilité de passage de l'eau dans un état modifié dans lequel l'eau devient trouble (on dit que l'eau a « tourné »), cet état étant qualifié ici d'état dégradé. Un tel état dégradé nécessite une vidange complète et un nouveau remplissage du bassin de la piscine ou nécessite un traitement curatif intense, coûteux et éventuellement nocif pour les utilisateurs ou pour l'environnement du fait de la quantité de produits chimiques à utiliser.

De très nombreux facteurs physico-chimiques ou bactériologiques peuvent être à l'origine de l'apparition d'un état dégradé, et plusieurs types de tels états peuvent se produire, ce qui rend très complexe la prévention du passage dans un état dégradé.

Les inventeurs ont constaté néanmoins qu'il existe une relation de proximité entre une piscine venant d'entrer dans un état dégradé et des piscines menacées de basculer très rapidement à leur tour dans le même état.

Ainsi, selon l'invention, il devient possible pour un centre de gestion d'un parc de piscines individuelles d'utiliser comme « capteur » une piscine ayant subi ce changement d'état, dite « piscine victime », et de déterminer les piscines menacées à leur tour de passage dans un état dégradé.

Selon l'invention, le procédé de gestion d'un parc de piscines, chaque piscine étant munie d'un moyen de contrôle de la qualité de l'eau contenue dans la piscine, chacun des moyens de contrôle communiquant au moyen d'un réseau de communication avec au moins un centre de gestion, comprend une première étape de détection d'un état dégradé sur au moins une piscine du parc, dite « piscine victime », et une deuxième étape de détermination de piscines du parc menacées de passage dans un état dégradé, dites pour chacune « piscine menacée ».

Selon l'invention, le centre de gestion peut communiquer au moyen du réseau de communication avec au moins un équipement de suivi d'au moins une piscine et le procédé de gestion peut comprendre une troisième étape d'alerte, dans laquelle le centre de gestion envoie un premier message d'alerte à l'équipement de suivi, le premier message d'alerte indiquant l'identité d'au moins une piscine menacée

Selon l'invention, lors de la troisième étape, le centre de gestion peut envoyer autant de premiers messages d'alerte personnalisés qu'il existe d'équipements de suivi, chaque équipement de suivi étant associé à un sous-ensemble du parc de piscines, le premier message d'alerte n'étant envoyé vers un équipement de suivi que si au moins une piscine du sous-ensemble est une piscine menacée.

Selon l'invention, le procédé de gestion peut comprendre une quatrième étape de signalisation, dans laquelle le centre de gestion envoie un deuxième message d'alerte au moyen de contrôle d'une piscine menacée, ce moyen de contrôle comprenant au moins un moyen de signalisation apte à transmettre un signal d'alerte à un utilisateur, le deuxième message contenant une information de type de menace et/ou contenant une indication de traitement préventif.

Selon l'invention, le procédé de gestion peut comprendre une cinquième étape d'activation directe dans laquelle le moyen de contrôle d'une piscine menacée reçoit une commande de traitement préventif par l'intermédiaire du réseau.

Selon l'invention, dans la deuxième étape du procédé de gestion, la détermination de piscines menacées peut prendre en compte la localisation relative d'une piscine, dite « piscine considérée », par rapport à la piscine victime pour déterminer si la piscine considérée est une piscine menacée.

Selon l'invention, la détermination de piscines menacées peut utiliser un critère de risque décroissant avec la valeur de la distance entre la piscine considérée et la piscine victime et/ou décroissant avec la valeur de l'angle mesuré entre une première direction passant par la piscine victime et orientée dans le sens du vent et une deuxième direction passant par la piscine victime et la piscine considérée.

Selon l'invention, le centre de gestion d'un parc de piscines équipé de moyens de communication par un réseau de communication avec des moyens de contrôle de la qualité de l'eau des piscines et avec au moins un équipement de suivi de plusieurs piscines, comprend des moyens matériels et logiciels aptes à la mise en oeuvre du procédé de gestion tel que décrit ci-dessus.

Selon l'invention, un équipement de suivi d'un sous-ensemble d'un parc de piscines, raccordé à un réseau de communication, comprend une interface homme-machine et des moyens matériels et logiciels aptes à :
- mémoriser un identifiant de chaque piscine appartenant au sous-ensemble,
- communiquer sur le réseau de communication avec un moyen de contrôle de la qualité de l'eau de chaque piscine appartenant au sous-ensemble,
- communiquer sur le réseau de communication avec un centre de gestion d'un parc de piscines, connu de l'équipement de suivi, et appliquant le procédé de gestion tel que décrit ci-dessus,
et, suite à la réception d'un message d'alerte provenant du centre de gestion et contenant un identifiant de piscine menacée de passage dans un état dégradé, aptes à exécuter au moins une des opérations suivantes si l'identifiant fait partie des identifiants mémorisés :
- utiliser l'interface homme-machine pour afficher le message d'alerte et/ou pour afficher une information en relation avec l'identifiant de piscine menacée,
- utiliser le réseau de communication pour envoyer au moyen de contrôle de la piscine menacée une commande de traitement préventif et/ou une commande de signalisation et/ou tout ou partie du message d'alerte.

Selon l'invention, un moyen de contrôle de la qualité de l'eau contenue dans une piscine, raccordé à un réseau de communication, comprend des moyens de signalisation et des moyens matériels et logiciels aptes à :
- enregistrer un identifiant de la piscine dans une mémoire du moyen de contrôle,
- communiquer sur le réseau de communication avec un centre de gestion d'un parc de piscines, connu du moyen de contrôle, et appliquant le procédé de gestion tel que décrit ci-dessus,
- communiquer sur le réseau de communication avec un équipement de suivi d'un sous-ensemble du parc de piscines, connu du moyen de contrôle,
et aptes à exécuter au moins l'une des deux opérations suivantes :
- suite à la réception d'un message d'alerte, provenant du centre de gestion ou provenant de l'équipement de suivi et contenant l'identifiant, utiliser les moyens de signalisation pour signaler un risque de passage dans un état dégradé et/ou une indication de traitement préventif,
- suite à la réception d'une commande de traitement préventif issue du centre de gestion ou de l'équipement de suivi, exécuter la commande de traitement préventif.

Selon l'invention, on utilise une piscine d'un parc de piscines comme capteur pour déterminer un risque potentiel sur d'autres piscines du parc quand la piscine passe dans un état dégradé.
La figure 1 représente un parc de piscines et sa liaison par un réseau de communication avec un centre de gestion de ce parc de piscines, des équipements de suivi et une base d'information.
La figure 2 représente une carte géographique indiquant la position d'une piscine victime et de piscines menacées.
La figure 3 représente un procédé de gestion d'un parc de piscines, selon l'invention.
La figure 4 représente l'affichage d'un premier message d'alerte sur un équipement de suivi.
La figure 5 représente l'affichage d'un deuxième message d'alerte, sur un moyen de contrôle.
La figure 6 représente une variante complémentaire d'une deuxième étape du procédé de gestion.
La figure 7 décrit une variante complémentaire d'une troisième étape du procédé de gestion.

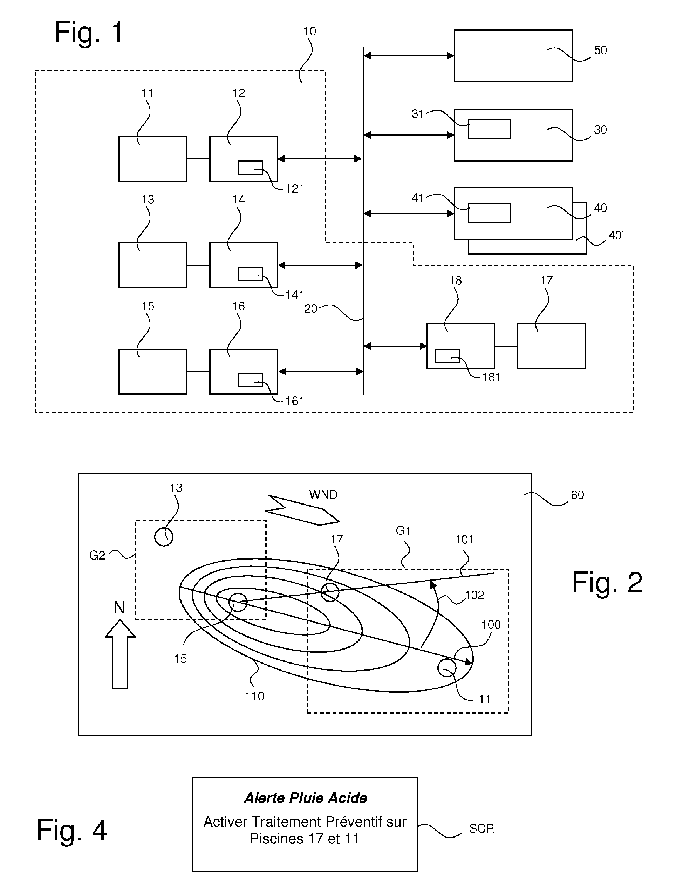

La figure 1 représente un parc de piscines 10 et sa liaison par un réseau de communication 20 avec un centre de gestion 30 de ce parc de piscines, des équipements de suivi 40 et 40' et une base d'information 50.

Le parc de piscines comprend quatre piscines, de type piscine individuelle découverte, installées dans une résidence principale ou secondaire. Chaque piscine comprend un moyen de contrôle de la qualité de l'eau comme décrit dans l'art antérieur, muni de moyens d'analyse et de moyens de traitement non représentés.

Ainsi, une première piscine 11 est raccordée à un premier moyen de contrôle 12, une deuxième piscine 13 est raccordée à un deuxième moyen de contrôle 14, une troisième piscine 15 est raccordée à un troisième moyen de contrôle 16, une quatrième piscine 17 est raccordée à un quatrième moyen de contrôle 18.

Chaque moyen de contrôle comprend des moyens de signalisation, respectivement 121, 141, 161, 181 pour les moyens de contrôle 12 à 18. Par souci de simplification, chaque moyen de contrôle est représenté sous forme d'un bloc unique mais il est entendu qu'il comprend plusieurs sous-ensembles éventuellement dissociés et susceptibles de communiquer entre eux par voie filaire, infrarouge ou hertzienne.

Les piscines et les moyens de contrôle peuvent être structurellement différents d'une piscine à l'autre. Ainsi, le parc de piscine constitue un ensemble d'éléments hétérogènes. Cependant, tous les moyens de contrôle sont reliés à un même réseau 20, par exemple et de préférence un réseau public de type Internet. Sur ce réseau est également relié un centre de gestion 30 du parc de piscines.

La définition du parc résulte en fait d'abonnements individuels au centre de gestion et se traduit au moins par la présence d'identifiants de chaque moyen de contrôle dans une mémoire 31 du centre de gestion. Réciproquement, un identifiant du centre de gestion est connu de chaque moyen de contrôle.

Ainsi, d'autres piscines éventuellement proches géographiquement des piscines 11, 13, 15 et 17 n'appartiennent pas au parc du fait de l'absence d'abonnement au centre de gestion, et il n'y a pas connaissance réciproque d'identifiants entre le moyen de contrôle d'une de ces autres piscines et le centre de gestion.

Outre un identifiant de chaque moyen de contrôle des piscines du parc, le centre de gestion dispose en mémoire de données précises sur la localisation de la piscine, ses caractéristiques dimensionnelles, les caractéristiques du moyen de contrôle et, éventuellement, il dispose également de données historiques sur l'état physico-chimique ou bactériologique de l'eau et/ou sur des opérations de maintenance.

Un premier équipement de suivi 40 est également raccordé au réseau. Cet équipement de suivi est utilisé par un premier professionnel de la maintenance de piscines, dit « agent d'entretien » ou encore « piscinier » ayant conclu un contrat d'entretien avec certains des propriétaires de piscines du parc, par exemple ceux de la première piscine 11 et de la quatrième piscine 17, définissant un sous-ensemble G1 au sein du parc.

De la même façon, un deuxième équipement de suivi 40', est utilisé par un deuxième professionnel de la maintenance de piscines ayant conclu un contrat d'entretien avec les propriétaires de la deuxième piscine 13 et de la troisième piscine 15, définissant un sous-ensemble G2 au sein du parc.

Chaque équipement de suivi est connu à la fois du centre de gestion et des moyens de contrôle du sous-ensemble concerné, au moins par un partage d'identifiants.

Un équipement de suivi comprend une interface homme-machine et dispose en mémoire, comme le centre de gestion, de données précises sur la localisation de la piscine, ses caractéristiques dimensionnelles, les caractéristiques du moyen de contrôle et, éventuellement, il dispose également de données historiques sur l'état physico-chimique ou bactériologique de l'eau et/ou sur des opérations de maintenance. Ces données sont préférentiellement enregistrées par le professionnel dans son équipement de suivi et ensuite communiquées au centre de gestion. Du fait de la possibilité de communication bidirectionnelle sur le réseau et de la présence de moyens matériels et logiciels adaptés dans les moyens de contrôle, dans le centre de gestion et dans les équipements de suivi, il est possible à partir du centre de gestion ou à partir d'un équipement de suivi d'avoir accès aux données mesurées par un moyen de contrôle et/ou de provoquer des opérations de traitement à distance sur ce moyen de contrôle. Un moyen de contrôle peut également avertir directement l'équipement de suivi correspondant et le centre de gestion lors d'un événement grave, et notamment en cas de passage dans un état dégradé.

Une base d'information 50 est également reliée au réseau. Il peut s'agir d'un serveur météorologique.

La figure 2 représente une carte géographique 60 indiquant la position d'une piscine victime et de piscines menacées. La carte est orientée selon la direction du Nord géographique N. Elle représente l'ensemble des piscines du parc. Pour simplifier et aux fins d'illustration du principe de l'invention, le parc ne comprend que quatre piscines mais l'invention est d'autant plus pertinente qu'un grand nombre de piscines appartient au parc. Dans ce cas, la carte peut aussi ne représenter qu'une portion du parc, sous forme de zoom.

Le moyen de contrôle 16 de la troisième piscine 15 a détecté l'apparition d'un état dégradé et transmet aussitôt l'information au centre de gestion. La piscine 15 est donc victime. Il existe une forte probabilité que ce changement d'état soit consécutif à une pollution par pluie acide ou autre phénomène météorologique local, susceptible de contaminer de la même façon toute piscine placée dans les mêmes conditions. La piscine 15 constitue donc un « capteur » localisant un foyer de risque.

L'évaluation du risque sur les piscines du parc utilise un critère de risque. Ce critère de risque est au moins décroissant avec la distance entre une piscine considérée, par exemple la quatrième piscine 17, et la piscine victime. Ainsi, un premier critère simple varie par exemple de 1 (pour une distance inférieure à 10 km) à 0 (pour une distance supérieure à 100 km).

Cependant, il est utile de prendre en considération la direction du vent dans le critère de risque. Sur la carte 60, la direction du vent figure sous la forme d'une flèche pleine WND. Cette information est obtenue par le centre de gestion auprès de la base d'information 50.

On définit une première direction 100 passant par la piscine victime et orientée dans le sens du vent et une deuxième direction 101 passant par la piscine victime et la piscine considérée et orientée dans ce sens. Un angle 102 mesuré entre ces deux directions varie entre 0° quand la piscine considérée est sous le vent de la piscine victime et 180 ° quand la piscine considérée est à l'opposé du vent de la piscine victime. Le critère de risque est décroissant quand l'angle 102 augmente. Ainsi un deuxième critère simple varie par exemple de 1 à 0 quand l'angle varie de 0° à 180°.

Préférentiellement, le critère de risque prend en compte à la fois la distance et la direction par rapport au vent, par exemple en effectuant le produit des deux critères simples.

Sur la carte 60, on a représenté plusieurs courbes de même risque (iso-risque), comme par exemple la courbe iso-risque 110, sous forme d'ellipses dont la piscine victime est un foyer et le grand axe est orienté dans la direction du vent. On suppose que la piscine considérée 17 est telle que le critère de risque dépasse un seuil prédéterminé. La troisième piscine 17 est donc menacée. De même, on suppose que la première piscine 11 est également menacée. Par contre, la deuxième piscine 13, bien que située sensiblement à une même distance de la piscine victime que la troisième piscine 17, n'est pas menacée, le critère de risque étant pour elle inférieur au seuil prédéterminé.

Pour un vent plus fort, les ellipses voient leur excentricité augmenter, et le risque devient nul dans la direction opposée au vent si le vent est la seule cause de changement d'état.

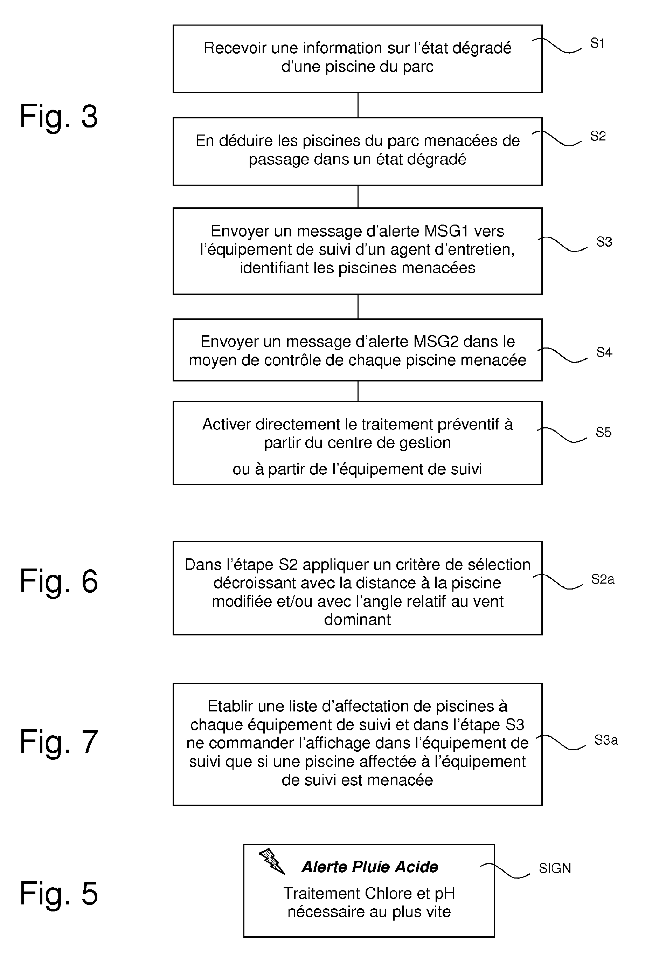

La figure 3 représente un procédé de gestion d'un parc de piscines, selon l'invention.

Dans une première étape S1, le centre de gestion acquiert l'information qu'une piscine est passée dans un état dégradé. Cette information est par exemple transmise directement au centre de gestion par le moyen de contrôle de la piscine ayant subi ce changement d'état. Alternativement, l'information est automatiquement transmise par le moyen de contrôle à l'équipement de suivi qui retransmet l'information au centre de gestion.

Dans une deuxième étape S2, les moyens logiciels du centre de gestion appliquent alors un programme de détermination des piscines menacées. Ce programme utilise un critère de risque comme expliqué précédemment et représenté à la figure 6. Le programme peut également comprendre le recours à un système expert, intégrant également des données de relief et/ou des données historiques. Certaines piscines peuvent être ainsi connues pour présenter une plus forte sensibilité du fait d'une constitution particulière ou du fait des moyens de contrôle utilisés ou encore sans qu'il y ait d'explication particulière mais simplement du fait d'incidents historiques. Le seuil prédéterminé peut donc être modulé selon cette sensibilité propre à chaque piscine et acquise par exemple automatiquement à l'aide du système expert.

Le critère de risque peut également être accru par la présence simultanée de deux piscines victimes, voire plus, dans une même zone. En variante du procédé, on ne considère qu'il y a menace que si deux piscines au moins d'une même zone sont victimes et si un même type de passage dans un état dégradé a été détecté pour ces deux piscines. Une liste de piscines menacées est établie.

Dans une troisième étape S3, le centre de gestion envoie un premier message d'alerte MSG1 vers l'équipement de suivi du professionnel. Ce premier message d'alerte indique l'identité des piscines menacées, par exemple les piscines 11 et 17 si on se réfère au cas de la figure 2. Préférentiellement, le type de menace est indiqué dans le premier message d'alerte, ainsi que le type de traitement préventif à appliquer. Le premier message d'alerte peut contenir ces informations sous une forme codée, mais l'équipement de suivi peut transformer ce message codé en un écran d'alerte facilement lisible ou encore en message sonore. La figure 4 représente à titre d'exemple l'affichage d'un écran d'alerte SCR sur l'interface homme machine 41 du premier équipement de suivi 4 faisant suite à la réception du premier message d'alerte.

Dans une quatrième étape S4, le centre de gestion envoie un deuxième message d'alerte MSG2 vers les moyens de contrôle des piscines menacées, à savoir respectivement les moyens de contrôle 12 et 18. Comme précédemment, le deuxième message peut être codé mais il provoque l'émission d'un signal compréhensible vers un utilisateur, par exemple le propriétaire de la piscine menacée. La figure 5 représente, à titre d'exemple l'affichage d'un signal d'alerte SIGN sur les moyens de signalisation du moyen de contrôle de la première piscine 11. Le message d'alerte contient préférentiellement une information sur la nature du traitement à appliquer.

Pour éviter d'effrayer inutilement le propriétaire de la piscine, la quatrième étape est soit facultative soit mise en oeuvre seulement si le centre de gestion constate l'absence de réaction de la part de l'équipement de suivi, soit encore mise en oeuvre avec un certain délai, par exemple quelques heures, après la troisième étape.

Il est aussi possible de transmettre un message directement au propriétaire par messagerie téléphonique numérique de type SMS.

Dans une cinquième étape S5, également facultative, le traitement préventif approprié est directement mis en oeuvre par le centre de gestion. Le traitement préventif peut aussi être mis en oeuvre à distance par le professionnel à l'aide de son équipement de suivi. Dans les deux cas, le moyen de contrôle de la piscine menacée reçoit une commande de traitement préventif par l'intermédiaire du réseau
Une option du moyen de contrôle permet au propriétaire d'accepter ou non une activation directe du moyen de contrôle par le centre de gestion ou le moyen de suivi.

Il est important de noter qu'un traitement préventif nécessite beaucoup moins de produits chimiques et/ou d'énergie qu'un traitement curatif.

Un traitement préventif peut consister également en la fermeture d'un écran mobile protégeant la piscine découverte.

Comme vu plus haut, la figure 4 représente l'affichage d'un écran d'alerte SCR sur un équipement de suivi et la figure 5 représente un signal d'alerte SIGN, émis par un moyen de signalisation d'un moyen de contrôle. Dans les deux cas, un afficheur de type LCD ou OLED peut être utilisé.

Ces messages peuvent être envoyés par le centre de gestion sous forme de chaînes alphanumériques. Préférentiellement, au moins une partie du message est enregistré dans une mémoire de l'équipement de suivi ou du moyen de contrôle. Par exemple, le contenu du signal SIGN est intégralement préenregistré dans le moyen de contrôle 12, de même par exemple que l'algorithme de traitement préventif. Le propriétaire simplement valide la mise en route du traitement préventif par appui sur une touche. Dans le deuxième message d'alerte MSG2, le centre de gestion envoie alors simplement un code provoquant en particulier l'affichage du signal d'alerte. Un exemple de signal d'alerte, préenregistré de manière partielle, est le suivant :

```
                      « Alerte » [Type_Menace]
 « - Traitement » [Type_Traitement] « nécessaire au plus vite. Appuyer
                      sur touche de validation »
```

Dans cet exemple, le centre de gestion envoie simplement au moyen de contrôle le contenu codé des variables [Type_Menace] et [Type_Traitement]. Le moyen de contrôle contient en mémoire les différentes chaînes alphanumériques correspondant aux différents codes et fait apparaître le message correspondant au code reçu.

Exemples de valeurs alphanumériques pour [Type_Menace] = « Pluie Acide » ou « Vent de Sable » ou « Pollution » etc.

Exemples de valeurs alphanumériques pour [Type_Traitement] = « préventif » ou « Chlore » ou « Chlore et pH » ou « UV » etc.

La figure 6 représente une variante complémentaire S2a de la deuxième étape S2 du procédé de gestion, décrite précédemment en relation avec cette deuxième étape.

La figure 7 décrit une variante complémentaire S3a de la troisième étape S3 du procédé de gestion.

Les moyens matériels et logiciels du centre de gestion permettant l'application du procédé de gestion et permettent également la mémorisation d'une table de correspondance entre identifiants de chaque moyen de contrôle et chaque équipement de suivi, c'est-à-dire une relation d'affectation de chaque piscine du parc à chaque professionnel. Lors de l'application de la deuxième étape, le centre de gestion ne commande l'affichage dans un équipement de suivi que si une piscine affectée à l'équipement de suivi est menacée. Par exemple, le premier message MSG1 ne sera envoyé qu'au premier équipement de suivi 41 car il ne concerne que le sous-ensemble G1 suivi par cet équipement. Aucun message n'est envoyé au deuxième équipement de suivi.

Si la première piscine 11 appartenait au deuxième sous-ensemble G2, alors seul apparaîtrait le numéro 17 dans l'écran SCR de la figure 4.

Le procédé de gestion est donc susceptible de nombreuses variantes, notamment par le fait que les messages et/ou les commandes sont directement transmis par le centre de gestion au moyen de contrôle ou sont transmis à l'équipement de suivi qui les répercute ou non au moyen de contrôle, en totalité ou partiellement ou après retraitement.

Selon l'invention, le centre de gestion est le dispositif dans lequel est déterminée l'identité des piscines menacées, une fois connue l'identité d'une piscine victime.

Dans un parc de piscines comprenant relativement peu de piscines individuelles, un seul installateur gère le parc de piscines. Son équipement de suivi devient cependant « centre de gestion » au sens de l'invention, si celui-ci contient un algorithme apte à déterminer les risques sur des piscines du parc à partir de la réception d'une information qu'une des piscines du parc est passée dans un état dégradé.

L'invention est indépendante de la nature du réseau de communication. Celui-ci peut être homogène ou hétérogène. Par exemple, dans le premier cas, toutes les communications sont assurées par Internet ou toutes les communications sont assurées par envois de SMS, alors que dans le deuxième cas certaines communications peuvent être assurées par Internet alors que d'autres communications peuvent être assurées par envois de SMS.

## Revendications

1. Procédé de gestion d'un parc de piscines, chaque piscine étant munie d'un moyen de contrôle de la qualité de l'eau contenue dans la piscine, chacun des moyens de contrôle communiquant au moyen d'un réseau de communication avec au moins un centre de gestion du parc de piscines, **caractérisé en ce qu'**il comprend une première étape (S1) de détection d'un état dégradé sur au moins une piscine du parc, dite « piscine victime », et une deuxième étape (S2) de détermination de piscines du parc menacées de passage dans un état dégradé, dites pour chacune « piscine menacée ».

2. Procédé de gestion selon la revendication 1, **caractérisé en ce que** le centre de gestion communique au moyen du réseau de communication avec au moins un équipement de suivi d'au moins une piscine et **en ce qu'**il comprend une troisième étape (S3) d'alerte, dans laquelle le centre de gestion envoie un premier message d'alerte à l'équipement de suivi, le premier message d'alerte indiquant l'identité d'au moins une piscine menacée

3. Procédé de gestion selon la revendication 2, **caractérisé en ce que**, lors de la troisième étape (S3a), le centre de gestion envoie autant de premiers messages d'alerte personnalisés qu'il existe d'équipements de suivi, chaque équipement de suivi étant associé à un sous-ensemble du parc de piscines, le premier message d'alerte n'étant envoyé vers un équipement de suivi que si au moins une piscine du sous-ensemble est une piscine menacée.

4. Procédé de gestion selon l'une des revendications précédentes, **caractérisé en ce qu'**il comprend une quatrième étape (S4) de signalisation, dans laquelle le centre de gestion envoie un deuxième message d'alerte au moyen de contrôle d'une piscine menacée, ce moyen de contrôle comprenant au moins un moyen de signalisation apte à transmettre un signal d'alerte à un utilisateur, le deuxième message contenant une information de type de menace et/ou contenant une indication de traitement préventif.

5. Procédé de gestion selon l'une des revendications précédentes, **caractérisé en ce qu'**il comprend une cinquième étape (S5) d'activation directe dans laquelle le moyen de contrôle d'une piscine menacée reçoit une commande de traitement préventif par l'intermédiaire du réseau.

6. Procédé de gestion selon l'une des revendications précédentes, **caractérisé en ce que**, dans la deuxième étape, la détermination de piscines menacées prend en compte la localisation relative d'une piscine, dite « piscine considérée », par rapport à la piscine victime pour déterminer si la piscine considérée est une piscine menacée.

7. Procédé de gestion selon la revendication 6, **caractérisé en ce que** la détermination de piscines menacées utilise un critère de risque décroissant avec la valeur de la distance entre la piscine considérée et la piscine victime et/ou décroissant avec la valeur de l'angle mesuré entre une première direction passant par la piscine victime et orientée dans le sens du vent et une deuxième direction passant par la piscine victime et la piscine considérée.

8. Centre de gestion d'un parc de piscines équipé de moyens de communication par un réseau de communication avec des moyens de contrôle de la qualité de l'eau des piscines et avec au moins un équipement de suivi de plusieurs piscines, **caractérisé en ce qu'**il comprend des moyens matériels et logiciels aptes à la mise en oeuvre du procédé de gestion selon l'une des revendications précédentes.

9. Equipement de suivi d'un sous-ensemble d'un parc de piscines, raccordé à un réseau de communication, **caractérisé en ce qu'**il comprend une interface homme-machine et des moyens matériels et logiciels aptes à :
- mémoriser un identifiant de chaque piscine appartenant au sous-ensemble,
- communiquer sur le réseau de communication avec un moyen de contrôle de la qualité de l'eau de chaque piscine appartenant au sous-ensemble,
- communiquer sur le réseau de communication avec un centre de gestion d'un parc de piscines, connu de l'équipement de suivi, et appliquant le procédé de gestion des revendications 1 à 7,
et, suite à la réception d'un message d'alerte provenant du centre de gestion et contenant un identifiant de piscine menacée de passage dans un état dégradé, aptes à exécuter au moins une des opérations suivantes si l'identifiant fait partie des identifiants mémorisés :
- utiliser l'interface homme-machine pour afficher le message d'alerte et/ou pour afficher une information en relation avec l'identifiant de piscine menacée,
- utiliser le réseau de communication pour envoyer au moyen de contrôle de la piscine menacée une commande de traitement préventif et/ou une commande de signalisation et/ou tout ou partie du message d'alerte.

10. Moyen de contrôle de la qualité de l'eau contenue dans une piscine, raccordé à un réseau de communication, **caractérisé en ce qu'**il comprend des moyens de signalisation et des moyens matériels et logiciels aptes à :
- enregistrer un identifiant de la piscine dans une mémoire du moyen de contrôle,
- communiquer sur le réseau de communication avec un centre de gestion d'un parc de piscines, connu du moyen de contrôle, et appliquant le procédé de gestion des revendications 1 à 7,
- communiquer sur le réseau de communication avec un équipement de suivi d'un sous-ensemble du parc de piscines, connu du moyen de contrôle,
et aptes à exécuter au moins l'une des deux opérations suivantes :
- suite à la réception d'un message d'alerte, provenant du centre de gestion ou provenant de l'équipement de suivi et contenant l'identifiant, utiliser les moyens de signalisation pour signaler un risque de passage dans un état dégradé et/ou une indication de traitement préventif,
- suite à la réception d'une commande de traitement préventif issue du centre de gestion ou de l'équipement de suivi, exécuter la commande de traitement préventif.
